# EUROPÄISCHE PATENTSCHRIFT

(11) **EP 3 997 686 B1**
(45) Veröffentlichungstag und Bekanntmachung des Hinweises auf die Patenterteilung: **09.09.2026**
(21) Anmeldenummer: 20746202.9
(22) Anmeldetag: 24.07.2020
(51) Int. Cl.: G08G 1/14, G08G 1/01, G08G 1/0965, H04W 4/44, H04W 4/46, H04W 4/024, H04W 4/029

(54) **ERKENNEN EINES BELEGUNGSZUSTANDSWECHSELS EINES PARKPLATZES**
DETERMINING A CHANGE IN OCCUPANCY STATUS OF A PARKING SPACE
DÉTERMINATION D'UN CHANGEMENT D'ÉTAT D'OCCUPATION D'UN ESPACE DE STATIONNEMENT

(30) Priorität: 19.09.2019 DE 102019214274
(43) Veröffentlichungstag der Anmeldung: 18.05.2022
(73) Patentinhaber: VOLKSWAGEN AKTIENGESELLSCHAFT, 38440 Wolfsburg (DE)
(72) Erfinder: KLOMP, Sven, 31311 Uetze / Dollbergen (DE); JÖRDENS, Christian, 38126 Braunschweig (DE); GÖRICKE, Bastian, 38446 Wolfsburg (DE); HÜGER, Philipp, 38471 Rühen (DE)
(86) Internationale Anmeldenummer: PCT/EP2020/071030
(87) Internationale Veröffentlichungsnummer: WO 2021/052658

(56) Entgegenhaltungen:
- DE-A1- 102012 212 347
- DE-A1- 102014 215 512
- US-A1- 2015 161 890
- US-A1- 2019 197 898

## Beschreibung

Die vorliegende Erfindung betrifft die Erkennung eines Belegungszustandswechsels eines Parkplatzes für ein Fahrzeug. Dabei wird unter dem Belegungszustandswechsel verstanden, dass sich der Belegungszustand eines Parkplatzes, welcher die Werte frei oder belegt aufweisen kann, von dem Zustand frei (bzw. belegt) in den Zustand belegt (bzw. frei) ändert.

Die DE 10 2013 209 298 A1 offenbart ein mobiles System für ein Fahrzeug zum Erkennen von einem potenziell freiwerdenden Parkplatz sowie ein Verfahren zum Erkennen von einem potenziell freiwerdenden Parkplatz. Das System kann einen potenziell freiwerdenden Parkplatz im Wesentlichen nur im Sichtbereich des Systems erkennen.

Die DE 10 2015 010 548 A1 beschreibt ein System und ein Verfahren zum Erkennen und Anzeigen des Freiwerdens eines Parkplatzes. Auch dieses System bzw. Verfahren kann einen freiwerdenden Parkplatz nur innerhalb des Sichtbereichs erkennen.

Die WO 2017/084844 A1 offenbart die Übergabe eines Parkplatzes durch das Erfassen einer Betätigung eines Mobilgeräts, welche signalisiert, dass sich ein Fahrer eines Fahrzeugs zu dem Parkplatz begibt. Diese Information kann dann über einen Server an einen Parkplatz suchende Benutzer weitergegeben werden.

Die in den vorab genannten Druckschriften beschriebenen Verfahren werten im Wesentlichen Signale aus, die sich im Sichtbereich des einen Parkplatz suchenden Fahrzeugs befinden, so dass ein frei werdender Parkplatz nur innerhalb dieses Sichtbereichs erkannt werden kann.

Darüber hinaus existieren nach dem Stand der Technik (z.B. der oben genannten WO 2017/084844 A1) sogenannte Backend-gestützte Ansätze, bei welchen Informationen über freie Parkplätze auf unterschiedliche Weise gesammelt und an einen Server geschickt werden. Die dort gesammelten Daten werden anschließend an anfragende Kunden gesendet. Jedoch sind Informationen zu Parkplätzen rasch veraltet, da in einer größeren Innenstadt ein frei werdender Parkplatz bereits nach wenigen Minuten wieder belegt ist. Daher können die Daten im Server bereits veraltet sein, bevor sie beim Kunden bzw. Fahrer ankommen, wobei die benötigte Anfahrt zum Parkplatz noch nicht einmal berücksichtigt ist. Ansätze zur Reservierung eines Parkplatzes existieren zwar für Parkhäuser, aber nicht für öffentliche Parkplätze.

Das Dokument US2015/0161890 A1 beschreibt ein Konzept zur Bestimmung von Wahrscheinlichkeiten dafür, dass ein Parkplatz von einem Fahrzeug verlassen und damit freigegeben wird. Dazu sendet ein einen Parkplatz belegendes Fahrzeug ein Statussignal aus, auf dessen Grundlage eine Freigabewahrscheinlichkeit für den Parkplatz bestimmt wird.

Daher stellt sich die vorliegende Erfindung die Aufgabe, einen Belegungszustandswechsel eines Parkplatzes ohne den Einsatz eines Servers auch außerhalb des Sichtbereichs des suchenden Fahrzeugs möglichst rasch zu erkennen.

Diese Aufgabe wird erfindungsgemäß durch ein Verfahren zur Erkennung eines Belegungszustandswechsels eines Parkplatzes nach Anspruch 1 gelöst. Die abhängigen Ansprüche definieren bevorzugte und vorteilhafte Ausführungsformen der vorliegenden Erfindung.

Im Rahmen der vorliegenden Erfindung wird ein Verfahren zur Erkennung eines Belegungszustandswechsels eines Parkplatzes bereitgestellt. Dabei liegt der Belegungszustandswechsel vor, wenn der Parkplatz gerade von einem Fahrzeug freigegeben wird oder gerade von dem Fahrzeug besetzt wird. Das erfindungsgemäße Verfahren umfasst folgende Schritte:
- Erfassen von Funksignalen innerhalb eines weiteren Fahrzeugs, welche über eine Car-2-Car- oder V2V-Kommunikation von dem Fahrzeug ausgesendet werden. Dabei sind diese Funksignale insbesondere Teil einer pWLAN-Kommunikation (ITS-G5), mit welcher so genannte standardisierte Nachrichten (Cooperative Awareness Messages (CAM)) von dem Fahrzeug zu dem weiteren Fahrzeug geschickt werden. Laut pWLAN (ITS-G5) werden Cooperative Awareness Messages von dem Fahrzeug regelmäßig (mit einer Frequenz von 1 Hz bis 10 Hz) ausgesendet. Da die Car-2-Car-Kommunikation oder Direktkommunikation Teil des Delegated Acts C2C CC der Europäischen Union ist, werden in Zukunft immer mehr Fahrzeuge Cooperative Awareness Messages aussenden.
- Auswerten dieser von dem Fahrzeug empfangenen Funksignale in dem weiteren Fahrzeug, um anhand der Auswertung innerhalb des weiteren Fahrzeugs zu erkennen, ob von dem Fahrzeug gerade ein Parkplatz freigegeben wird oder von dem Fahrzeug gerade ein Parkplatz besetzt wird. In diesem Schritt werden insbesondere nur diese von dem Fahrzeug empfangenen Funksignale und keine optischen Signale, keine Ultraschallsignale, keine Radarsignale und keine Funksignale von anderen Sendern ausgewertet. Erfindungsgemäß ist es zwar möglich, dass auch optische Signale, Ultraschallsignale, Radarsignale oder Funksignale von anderen Sendern in diesem Schritt ausgewertet werden, aber der Schwerpunkt der Auswertung zur Erkennung des Belegungszustandswechsels liegt in der Auswertung der Funksignale von dem Fahrzeug.

Da die Funksignale von dem Fahrzeug über eine Car-2-Car-Kommunikation an das weitere Fahrzeug übertragen werden, ist vorteilhafterweise kein Server bzw. Backend notwendig, was die Übermittlung der Funksignale und letztlich die Ermittlung eines Ergebnisses der Auswertung beschleunigt. Indem mit den Funksignalen von dem Fahrzeug insbesondere standardisierte Nachrichten innerhalb des weiteren Fahrzeugs ausgewertet werden, müssen vorteilhafterweise einparkende oder ausparkende Fahrzeuge keine zusätzliche Hardware oder Software aufweisen. Lediglich diejenigen Fahrzeuge, welche mithilfe des erfindungsgemäßen Verfahrens einen Belegungszustandswechsel eines Parkplatzes erkennen wollen, benötigen eine entsprechende Software. Da eine Car-2-Car-Kommunikation eine Reichweite von 500 m aufweisen kann, erfasst das weitere Fahrzeug auch Funksignale von Fahrzeugen außerhalb des Sichtbereichs des weiteren Fahrzeugs. Zusammenfassend löst das erfindungsgemäße Verfahren damit die oben gestellte Aufgabe.

Erfindungsgemäß umfassen die Funksignale Informationen über die aktuelle Position des Fahrzeugs und über Positionen des Fahrzeugs in der Vergangenheit. Anhand der jeweils aktuellen Position des Fahrzeugs kann eine Trajektorie des Fahrzeugs erstellt werden, anhand deren Analyse ein Einparkvorgang oder Ausparkvorgang des Fahrzeugs identifiziert werden kann. Anhand der Position des Fahrzeugs (in der Vergangenheit) kann auch die Position des Parkplatzes ermittelt werden. Informationen über die aktuelle Position des Fahrzeugs können eine Historie von etwa 200 m aufweisen, so dass quasi jederzeit eine mindestens 200 m lange Trajektorie des Fahrzeugs erstellt werden kann.

Gemäß einer bevorzugten erfindungsgemäßen Ausführungsform umfassen die von dem Fahrzeug ausgesendeten Funksignale zusätzlich eine oder mehrere Nachrichten, welche selbst ein oder mehrere Informationselemente umfassen, die aus folgender Informationsmenge ausgewählt sind:
- Die Ausmaße (z.B. Höhe, Breite und Länge) des Fahrzeugs. Anhand der Ausmaße des Fahrzeugs kann auf die Ausmaße eines von dem Fahrzeug frei gegebenen Parkplatzes zurückgeschlossen werden.
- Lichtsignale des Fahrzeugs, welche Blinksignale des Fahrzeugs umfassen. Beispielsweise kann der gesetzte Blinker des Fahrzeugs ein Hinweis auf einen Einparkvorgang oder Ausparkvorgang sein.
- Eine Geschwindigkeit des Fahrzeugs. Einparkvorgänge und Ausparkvorgang finden typischerweise bei einer geringen Geschwindigkeit statt (d.h. die Geschwindigkeit liegt unterhalb eines Geschwindigkeits-Schwellenwerts), so dass anhand der Geschwindigkeit des Fahrzeugs auf einen Einparkvorgang oder Ausparkvorgang geschlossen werden kann.
- Eine Beschleunigung des Fahrzeugs. Während eines Einparkvorgangs oder Ausparkvorgangs befindet sich die Beschleunigung in der Regel unterhalb eines Beschleunigungs-Schwellenwerts, so dass auch die Beschleunigung des Fahrzeugs ein Indiz für einen Einparkvorgang oder Ausparkvorgang des Fahrzeugs ist.
- Der aktuell eingelegte Gang oder ein Gangwechsel des Fahrzeugs. Auch der Gangwechsel (insbesondere zwischen Vorwärts- und Rückwärtsgang) kann als Indiz für einen Einparkvorgang oder Ausparkvorgang eingesetzt werden.
- Ein Lenkwinkel des Fahrzeugs. Wenn sich der Lenkwinkel des Fahrzeugs in kurzer Zeit mehrfach stark verändert (z.B. von einem vollständigen Linkseinschlag zu einem vollständigen Rechtseinschlag, oder umgekehrt), ist dies ein starkes Indiz für einen Einparkvorgang oder Ausparkvorgang des Fahrzeugs.
- Eine Ausrichtung des Fahrzeugs. Auch die Ausrichtung des Fahrzeugs kann ein Indiz für einen Einparkvorgang oder Ausparkvorgang darstellen. Wenn beispielsweise der Winkel zwischen der Längsachse des Fahrzeugs und der Längsrichtung der Straße, an welcher sich Parkplätze befinden, größer als ein Winkel-Schwellenwert ist, ist dies ein Indiz für einen Einparkvorgang oder Ausparkvorgang des Fahrzeugs.

Erfindungsgemäß umfasst das Auswerten der Funksignale in dem weiteren Fahrzeug eine Analyse des einen oder der mehreren Informationselemente anhand eines vorgegebenen Analysealgorithmus. Wie bereits vorab bei der Beschreibung der Elemente der Informationsmenge ausgeführt ist, kann anhand der Analyse dieser Informationselemente eine Art Wahrscheinlichkeit dafür bestimmt werden, ob sich das Fahrzeug in einem Einparkvorgang oder Ausparkvorgang befindet oder einen solchen Vorgang gerade absolviert hat.

Durch die Analyse der vorab angegebenen Informationselemente kann jeweils ein Indiz oder eine Wahrscheinlichkeit für einen Einparkvorgang bzw. Ausparkvorgang des Fahrzeugs angegeben werden, wodurch durch eine entsprechende Aufsummation dieser Indices oder Wahrscheinlichkeiten eine Gesamtwahrscheinlichkeit für einen Einparkvorgang bzw. Ausparkvorgang des Fahrzeugs ermittelt werden kann. Wenn diese Gesamtwahrscheinlichkeit beispielsweise über einem Gesamtwahrscheinlichkeits-Schwellenwert liegt, wird erfindungsgemäß davon ausgegangen, dass ein Einparkvorgang bzw. Ausparkvorgang des Fahrzeugs vorliegt.

Dabei bestimmt der Analysealgorithmus eine Trajektorie des Fahrzeugs anhand der Änderung der Position des Fahrzeugs über der Zeit. Anhand dieser Trajektorie schließt der Analysealgorithmus dann auf einen Einparkvorgang bzw. Ausparkvorgang des Fahrzeugs, wenn die Form der Trajektorie im Wesentlichen einer vorgegebenen Einpark- oder Auspark-Trajektorie entspricht..

Darüber hinaus kann der Analysealgorithmus zusätzlich einen Vergleich der Position des Fahrzeugs mit Kartendaten, welche Parkplätze anzeigen, durchführen. Durch diesen Vergleich der aktuellen Positionsinformation des Fahrzeugs mit den Kartendaten kann bestimmt werden, ob sich das Fahrzeug auf einer Straße oder auf einem Parkplatz befindet.

Darüber hinaus kann das erfindungsgemäße Verfahren zusätzlich umfassen:
- Erfassen von Informationen eines Mobilgeräts, welche eine Bewegung dieses Mobilgeräts beschreiben. In diesem Schritt werden insbesondere über die Beschleunigungssensoren des Mobilgeräts oder mobilen Endgeräts Informationen über aktuelle Bewegungen eines potentiellen Fahrers eines Fahrzeugs aufgesammelt.
- Auswerten der Informationen des Mobilgeräts, um durch diese Auswertung zu erkennen, ob ein Belegungszustandswechsel eines Parkplatzes stattfindet. Beispielsweise kann ein Ausparkvorgang vorliegen, wenn bei der Auswertung der Informationen ein Übergang vom Gehen (langsame Geschwindigkeit und zusätzlich detektiert ein Schrittzähler des Mobilgeräts Schritte) zum Fahren (schnellere Geschwindigkeit und zusätzlich detektiert der Schrittzähler keine Schritte) erkannt wird. In ähnlicher Weise kann ein Einparkvorgang vorliegen, wenn bei der Auswertung der Informationen des Mobilgeräts ein Übergang vom Fahren zum Gehen erkannt wird.

Im Gegensatz zur Grundidee der vorliegenden Erfindung benötigt die vorab beschriebene Ausführungsform einen Backend-Server, welchem die Informationen des Mobilgeräts oder zumindest das Ergebnis der Auswertung der Informationen des Mobilgeräts z.B. per Mobilfunk übermittelt werden. Darüber muss die entsprechende Funktion auf dem Mobilgerät installiert werden.

Erfindungsgemäß kann ein Ergebnis des Auswertens der Funksignale des Fahrzeugs (z.B. das Ergebnis der Auswertung der Cooperative Awareness Messages) an einen Server übertragen werden. Mit dieser Variante können Backend-gestützte Verfahren verbessert werden.

Zusätzlich oder alternativ kann das Ergebnis des Auswertens der Funksignale auch über eine Car-2-Car-Kommunikation an ein anderes Fahrzeug kommuniziert werden. Dazu muss allerdings das andere Fahrzeug in der Lage sein, die entsprechende Information auszuwerten.

Insbesondere ist eine Ende-zu-Ende-Latenz nicht größer als 15 Sekunden. Dabei entspricht die Ende-zu-Ende-Latenz einer Zeitspanne vom Erfassen der Funksignale bis zum Ende der Auswertung der Funksignale. Diese geringe Ende-zu-Ende-Latenz stellt einen erheblichen Unterschied zum Stand der Technik dar, der aufgrund der Kommunikation mit einem Backend-Server eine deutlich längere Ende-zu-Ende-Latenz aufweist.

Es sei darauf hingewiesen, dass insbesondere von dem Fahrzeug mittels der Funksignale keine Nachricht ausgegeben wird, welche explizit besagt, dass ein Belegungszustandswechsel eines Parkplatzes erfolgt.

Damit unterscheidet sich die vorliegende Erfindung insbesondere von Verfahren, bei welchen das Fahrzeug, welches einen Belegungszustandswechsel eines Parkplatzes initiiert (d.h. einen Parkplatz freigibt oder einen Parkplatz besetzt), diese Information explizit (meist über einen Server) an ein weiteres Fahrzeug übermittelt. Unter der expliziten Übermittlung der Information wird dabei verstanden, dass explizit die Information, dass ein Parkplatz freigegeben wird oder dass ein Parkplatz besetzt wird, meist mit der Angabe der Position des Parkplatzes übermittelt wird. Im Gegensatz dazu wird erfindungsgemäß eine solche Information nicht explizit von dem Fahrzeug übermittelt, sondern das weitere Fahrzeug muss diese Information anhand der Auswertung oder Analyse der Funksignale des Fahrzeugs bestimmen. Diese explizite Information über einen Belegungszustandswechsel eines Parkplatzes ist im Gegensatz zu den Cooperative Awareness Messages nicht standardisiert. Wenn also erfindungsgemäß diese explizite Information nicht übertragen wird, kann die vorliegende Erfindung nur mit standardisierten Nachrichten arbeiten. Das weist den Vorteil auf, dass nur das einen Parkplatz suchende (d.h. das weitere) Fahrzeug erfindungsgemäß ausgestaltet werden muss, da nur vorausgesetzt wird, dass sich die die Funksignale abgebenden Fahrzeuge standardkonform verhalten.

Darüber hinaus wird vorteilhafterweise eine Position des Parkplatzes bestimmt, wenn anhand der Auswertung erkannt wird, dass das Fahrzeug den Parkplatz gerade freigibt. Zusätzlich kann in diesem Fall eine Route von einer aktuellen Position des weiteren Fahrzeugs zu der Position des Parkplatzes automatisch bestimmt werden. Diese Variante weist den Vorteil auf, dass der Fahrer des weiteren Fahrzeugs quasi nur das erfindungsgemäße Verfahren initiieren muss. Das erfindungsgemäße Verfahren sucht dann nach einem freiwerdenden Parkplatz und leitet den Fahrer automatisch per Navigationsgerät zu diesem Parkplatz.

Des Weiteren kann das erfindungsgemäße Verfahren zusätzlich folgende Schritte umfassen:
- Erfassen einer Information über einen freien Parkplatz anhand eines weiteren (hier nicht weiter beschriebenen) Verfahrens.
- Informieren des weiteren Fahrzeugs, wenn anhand der Auswertung erkannt wird, dass der freie Parkplatz von dem Fahrzeug gerade besetzt wird.

Die vorab beschriebene Ausführungsform ist insbesondere interessant, wenn der Fahrer über einen Dienst, wie Parkopedia, der mit einem Backend-Server arbeitet, eine Empfehlung für einen freien Parkplatz bekommen hat. In diesem Fall ist es von Vorteil, wenn der Fahrer auf dem Weg zu diesem Parkplatz über den erfindungsgemäß erkannten Belegungszustandswechsel des empfohlenen Parkplatzes informiert wird. Dazu kann das weitere Fahrzeug (in dem der Fahrer sitzt) den Fahrer beispielsweise mittels einer entsprechenden Ausgabe eines Hinweises über diesen Belegungszustandswechsel informieren.

Darüber hinaus wird im Rahmen der vorliegenden Erfindung eine Vorrichtung zur Erkennung eines Belegungszustandswechsels eines Parkplatzes bereitgestellt. Dabei umfasst die erfindungsgemäße Vorrichtung einen Prozessor und Kommunikationsmittel zum Erfassen von Funksignalen in einem weiteren Fahrzeug, welche mittels einer Car-2-Car-Kommunikation von einem Fahrzeug gesendet werden. Die Vorrichtung ist mittels seines Prozessors ausgestaltet, um die Funksignale in dem weiteren Fahrzeug auszuwerten, um anhand dieser Auswertung zu erkennen, ob ein Parkplatz von dem Fahrzeug freigegeben wird oder von dem Fahrzeug gerade besetzt wird.

Die Vorteile der erfindungsgemäßen Vorrichtung entsprechen den Vorteilen des erfindungsgemäßen Verfahrens, welche vorab im Detail ausgeführt sind, so dass hier auf eine Wiederholung verzichtet wird.

Vorteilhafterweise ist die erfindungsgemäße Vorrichtung zur Durchführung des erfindungsgemäßen Verfahrens ausgestaltet.

Schließlich wird im Rahmen der vorliegenden Erfindung ein Fahrzeug bereitgestellt, welches eine erfindungsgemäße Vorrichtung umfasst.

Die vorliegende Erfindung weist folgende Vorteile gegenüber dem Stand der Technik auf.
- Im Vergleich zum meist mit Backend-Servern arbeitenden Stand der Technik ist die vorliegende Erfindung in der Lage, die Information über einen Belegungszustandswechsel eines Parkplatzes (insbesondere über einen freiwerdenden Parkplatz) rascher bereitzustellen.
- Da eine direkte Vorbeifahrt des weiteren Fahrzeugs nicht notwendig ist, um über einen Belegungszustandswechsel eines Parkplatzes in seiner Umgebung informiert zu werden, weist die vorliegende Erfindung vorteilhafterweise eine größere Abdeckung auf. Das heißt, erfindungsgemäß wird in einem größeren Bereich nach einem Parkplatz gesucht.
- Da jedes Fahrzeug in Zukunft Cooperative Awareness Messages aussenden wird, benötigen nur Fahrzeuge, welche über einen Belegungszustandswechsel in Ihrer Nähe informiert werden wollen, eine entsprechende erfindungsgemäße Software.

Die vorliegende Erfindung ist insbesondere für Kraftfahrzeuge geeignet. Selbstverständlich ist die vorliegende Erfindung aber nicht auf diesen bevorzugten Anwendungsbereich eingeschränkt, da die vorliegende Erfindung prinzipiell auch bei anderen Fortbewegungsmitteln (zum Beispiel Schiffen, Flugzeugen, Fahrrädern, Motorrädern) eingesetzt werden kann.

Im Folgenden wird die vorliegende Erfindung anhand bevorzugter erfindungsgemäßer Ausführungsformen mit Bezug zu den Figuren im Detail beschrieben.

In Fig. 1 ist schematisch ein erfindungsgemäßes Fahrzeug mit einer erfindungsgemäßen Vorrichtung dargestellt.

In Fig. 2 ist der Flussplan eines erfindungsgemäßen Verfahrens dargestellt.

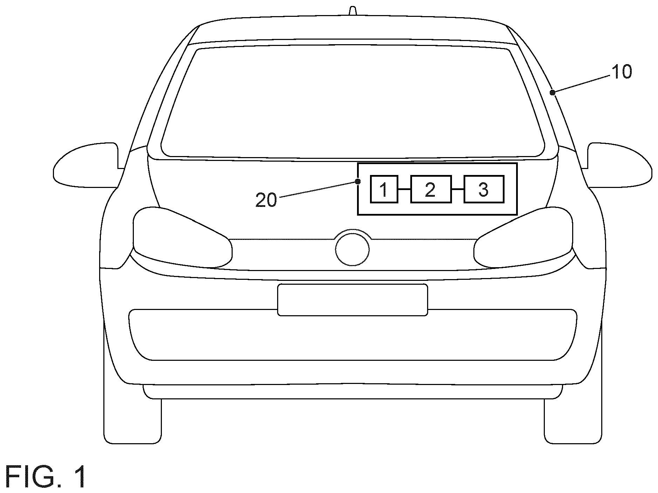

In Fig. 1 ist schematisch ein erfindungsgemäßes Fahrzeug 10 dargestellt, welches eine erfindungsgemäße Vorrichtung 20 umfasst. Die Vorrichtung 20 umfasst ihrerseits einen Prozessor 2, Kommunikationsmittel 1 und eine Anzeige 3. Über die Kommunikationsmittel 1 werden Cooperative Awareness Messages von Fahrzeugen in der Umgebung erfasst, welche erfindungsgemäß mittels des Prozessors 2 ausgewertet werden. Mit der Anzeige 3 kann dann ein Ergebnis der Auswertung hinsichtlich der Erkennung eines Belegungszustandswechsels eines Parkplatzes angezeigt werden.

Die Cooperative Awareness Messages werden in Form von Funksignalen immer von jedem Fahrzeug ausgesendet, also auch während und nach einem Einparkvorgang oder Ausparkvorgang. Das weitere Fahrzeug 10 in der Umgebung des jeweiligen Fahrzeugs empfängt diese Funksignale oder Daten und analysiert sie. Das dabei eingesetzte pWLAN (ITS-G5) weist eine Reichweite von ca. 500 m auf. Durch Vergleich der anhand der Funksignale übermittelten Positionsinformation des Fahrzeugs mit einer Karte kann bereits bestimmt werden, ob sich das Fahrzeug auf einer Straße oder auf einem Parkplatz befindet. Sollte die Position des Fahrzeugs aufgrund von Ungenauigkeiten des verwendeten Satellitennavigationssystems zu ungenau sein, können weitere über die Funksignale übermittelte Daten genutzt werden, um einen Belegungszustandswechsel eindeutig zu identifizieren. Beispielsweise ist ein gesetzter Blinker ein weiterer Hinweis auf einen Einparkvorgang oder Ausparkvorgang. Auch die Trajektorie des Fahrzeugs, welche anhand der über die Funksignale des Fahrzeugs übermittelten Informationen bestimmt werden kann, kann analysiert werden, um den Belegungszustandswechsel zu identifizieren. Darüber hinaus findet ein Einparkvorgang oder Ausparkvorgang typischerweise bei geringen Geschwindigkeiten statt, so dass eine Information über die Geschwindigkeit oder Beschleunigung des Fahrzeugs ebenfalls zur Erkennung des Belegungszustandswechsels genutzt werden kann. Darüber hinaus kann auch ein Gangwechsel zwischen Vorwärts- und Rückwärtsgang zur genaueren Erkennung des Belegungszustandswechsels eingesetzt werden.

Wenn das weitere Fahrzeug 10 aufgrund der Analyse der von dem Fahrzeug erfassten Funksignale zu dem Ergebnis gekommen ist, dass das Fahrzeug gerade ausparkt oder bereits ausgeparkt hat, kann es den Fahrer informieren und gegebenenfalls gleich automatisch eine Route zu dem freigegebenen Parkplatz berechnen.

Erfindungsgemäß ermittelte Informationen über das Erkennen eines Belegungszustandswechsels eines Parkplatzes (also Informationen über gerade freigewordene oder gerade belegte Parkplätze) können auch an einen Backend-Server z.B. per Mobilfunk gesendet werden, so dass dieser Server seine Karten aktualisieren kann. Der Vorteil gegenüber herkömmlichen Verfahren ist dabei, dass das weitere Fahrzeug 10 nicht direkt an dem freigewordenen oder gerade belegten Parkplatz vorbeifahren muss, um den Belegungszustandswechsel zu erkennen. Da erfindungsgemäß ein Belegungszustandswechsel eines Parkplatzes auch erkannt wird, wenn sich dieser Parkplatz außerhalb des Sichtbereichs des Fahrzeugs befindet, ist im Vergleich zum Stand der Technik eine größere Abdeckung durch das einzelne Fahrzeug möglich.

Bei einer Verknüpfung der vorliegenden Erfindung mit einem Backend-Server kann eine entsprechende Funktion zusätzlich auch per Mobilfunk angeboten werden, so dass das Verfahren auch von Fahrzeugen ohne Car-2-Car-Kommunikation genutzt werden kann, indem der Fahrer die Information über sein Smartphone bezieht.

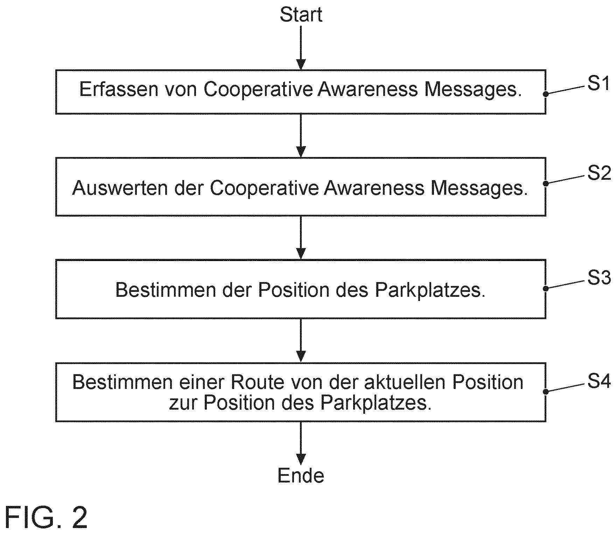

In Fig. 2 ist schematisch ein Flussplan des erfindungsgemäßen Verfahrens dargestellt.

Im ersten Schritt S1 werden Cooperative Awareness Messages eines Fahrzeugs innerhalb des weiteren Fahrzeugs 10 erfasst.

Im nächsten Schritt S2 werden diese Cooperative Awareness Messages innerhalb des weiteren Fahrzeugs 10 ausgewertet, um dadurch einen Belegungszustandswechsel eines Parkplatzes zu erkennen.

Wenn während der Auswertung im Schritt S2 ein Freiwerden eines Parkplatzes erkannt wird, wird im Schritt S3 anhand einer weiteren Auswertung der Cooperative Awareness Messages des Fahrzeugs die Position dieses Parkplatzes bestimmt.

Schließlich wird im Schritt S4 eine Route von der aktuellen Position des weiteren Fahrzeugs 10 zur Position des Parkplatzes bestimmt.

### Bezugszeichenliste

- 1: Kommunikationsmittel
- 2: Prozessor
- 3: Anzeige
- 10: Fahrzeug
- 20: Vorrichtung
- S1-S4: Verfahrensschritt

## Patentansprüche

1. Verfahren zur Erkennung eines Belegungszustandswechsels eines Parkplatzes, wobei der Parkplatz von einem Fahrzeug frei gegeben wird oder von dem Fahrzeug besetzt wird, wobei das Verfahren umfasst:
Erfassen (S1) von Funksignalen in einem weiteren Fahrzeug (10), welche mittels einer Car-2-Car-Kommunikation von dem Fahrzeug gesendet werden, wobei von dem Fahrzeug mittels der Funksignale mindestens eine Nachricht ausgegeben wird, die ein oder mehrere Informationselemente umfasst, wobei die ein oder mehreren Informationselemente die Informationen über die aktuelle Position des Fahrzeugs und über Positionen des Fahrzeugs in der Vergangenheit umfassen, und
Auswerten (S2) der Funksignale in dem weiteren Fahrzeug (10), um zu erkennen, ob ein Parkplatz von dem Fahrzeug frei gegeben wird oder von dem Fahrzeug besetzt wird, wobei das Auswerten (S2) der Funksignale eine Analyse der ein oder mehreren Informationselemente anhand eines vorgegebenen Analysealgorithmus umfasst, wobei der Analysealgorithmus eine Trajektorie des Fahrzeugs anhand der Änderung der Position des Fahrzeugs über der Zeit bestimmt und auf einen Einparkvorgang bzw. Ausparkvorgang des Fahrzeugs schließt, wenn die Form der Trajektorie im Wesentlichen einer vorgegebenen Einpark- oder Auspark-Trajektorie entspricht.

2. Verfahren nach Anspruch 1,
**dadurch gekennzeichnet,**
**dass** von dem Fahrzeug mittels der Funksignale mindestens eine zusätzliche Nachricht ausgegeben wird, die ein oder mehrere Informationselemente umfasst, die ausgewählt sind aus:
• Ausmaße des Fahrzeugs,
• Lichtsignale des Fahrzeugs, welche Blinksignale des Fahrzeugs umfassen,
• eine Geschwindigkeit des Fahrzeugs,
• eine Beschleunigung des Fahrzeugs,
• ein Gang oder Gangwechsel des Fahrzeugs,
• ein Lenkwinkel des Fahrzeugs,
• eine Position des Fahrzeugs, und
• eine Ausrichtung des Fahrzeugs.

3. Verfahren nach einem der Ansprüche 1 bis 2,
**dadurch gekennzeichnet,**
**dass** der Analysealgorithmus zusätzlich einen Vergleich der Position des Fahrzeugs mit Kartendaten, die Parkplätze indizieren, durchführt.

4. Verfahren nach einem der vorhergehenden Ansprüche,
wobei das Verfahren zusätzlich folgende Schritte umfasst:
Erfassen von Informationen eines Mobilgeräts, welche eine Bewegung des Mobilgeräts beschreiben, und
Auswerten der Informationen des Mobilgeräts, um den Belegungszustandswechsel zu erkennen.

5. Verfahren nach einem der voranstehenden Ansprüche,
**dadurch gekennzeichnet,**
**dass** ein Ergebnis des Auswertens der Funksignale an einen Backend-Server und/oder ein anderes Fahrzeug mittels der Car-2-Car-Kommunikation übertragen wird.

6. Verfahren nach einem der vorangehenden Ansprüche,
**dadurch gekennzeichnet,**
**dass** eine Ende-zu-Ende-Latenz nicht größer als 15 Sekunden ist.

7. Eine Vorrichtung (20)
zur Erkennung eines Belegungszustandswechsels eines Parkplatzes, umfassend Kommunikationsmittel (1) zum Erfassen von Funksignalen in einem weiteren Fahrzeug, welche mittels einer Car-2-Car-Kommunikation von einem Fahrzeug gesendet werden, und
einen Prozessor (2), um die Funksignale in dem weiteren Fahrzeug gemäß dem Verfahren aus Anspruch 1 auszuwerten, um anhand dieser Auswertung zu erkennen, ob ein Parkplatz von dem Fahrzeug freigegeben wird oder von dem Fahrzeug gerade besetzt wird.

8. Fahrzeug (10) mit der Vorrichtung nach Anspruch 7.

## Claims

1. Method for detecting a change in occupancy state of a parking space, wherein the parking space is vacated by a vehicle or occupied by the vehicle, wherein the method comprises:
acquiring (S1) radio signals in another vehicle (10), which are transmitted by the vehicle by means of car-2-car communication, wherein the vehicle outputs at least one message by means of the radio signals, which message includes one or more information elements, wherein the one or more information elements include information about the current position of the vehicle and about positions of the vehicle in the past, and
evaluating (S2) the radio signals in the other vehicle (10) to detect whether a parking space is being vacated by the vehicle or occupied by the vehicle, wherein the evaluation (S2) of the radio signals includes an analysis of the one or more information elements using a specified analysis algorithm, wherein the analysis algorithm determines a trajectory of the vehicle on the basis of the change in the position of the vehicle over time and infers a parking operation or unparking operation of the vehicle if the shape of the trajectory substantially corresponds to a specified parking or unparking trajectory.

2. Method according to claim 1,
**characterized in that**,
the vehicle outputs at least one additional message by means of the radio signals, which message includes one or more information elements selected from:
• dimensions of the vehicle,
• light signals of the vehicle, including turn signals of the vehicle,
• a speed of the vehicle,
• an acceleration of the vehicle,
• a gear or gear change of the vehicle,
• a steering angle of the vehicle,
• a position of the vehicle, and
• an orientation of the vehicle.

3. Method according to either of claims 1 or 2,
**characterized in that**,
the analysis algorithm also performs a comparison of the position of the vehicle with map data which indicate parking spaces.

4. Method according to any of the preceding claims,
wherein the method additionally comprises the following steps:
acquiring information from a mobile device, which information describes a movement of the mobile device, and
evaluating the information from the mobile device in order to detect the change in occupancy state.

5. Method according to any of the preceding claims,
**characterized in that**,
a result of the evaluation of the radio signals is transmitted to a backend server and/or another vehicle by means of the car-2-car communication.

6. Method according to any of the preceding claims,
**characterized in that**,
an end-to-end latency is no longer than 15 seconds.

7. Device (20) for detecting a change in occupancy state of a parking space, comprising
communication means (1) for acquiring radio signals in another vehicle, which are transmitted by a vehicle by means of car-2-car communication, and
a processor (2) for evaluating the radio signals in the other vehicle according to the method of claim 1 in order to detect, on the basis of this evaluation, whether a parking space is being vacated by the vehicle or is currently being occupied by the vehicle.

8. Vehicle (10) comprising the device according to claim 7.

## Revendications

1. Procédé de reconnaissance d'un changement d'état d'occupation d'une place de stationnement, dans lequel la place de stationnement est libérée par un véhicule ou est occupée par le véhicule, dans lequel le procédé comprend :
la détection (S1), dans un autre véhicule (10), de signaux radio qui sont envoyés par le véhicule par le biais d'une communication Car-2-Car, dans lequel au moins un message, comprenant un ou plusieurs éléments d'information, est émis par le véhicule par le biais des signaux radio, dans lequel les un ou plusieurs éléments d'information comprennent les informations sur la position actuelle du véhicule et sur des positions du véhicule dans le passé, et
l'évaluation (S2) des signaux radio dans l'autre véhicule (10) pour reconnaître si une place de stationnement est libérée par le véhicule ou est occupée par le véhicule, dans lequel l'évaluation (S2) des signaux radio comprend une analyse des un ou plusieurs éléments d'information à l'aide d'un algorithme d'analyse prédéfini, dans lequel l'algorithme d'analyse détermine une trajectoire du véhicule à l'aide de la variation de la position du véhicule dans le temps et conclut à une opération de stationnement ou à une opération de sortie de stationnement du véhicule lorsque la forme de la trajectoire correspond sensiblement à une trajectoire de stationnement ou de sortie de stationnement prédéfinie.

2. Procédé selon la revendication 1,
**caractérisé en ce**
**qu'**il est émis, par le biais des signaux radio, au moins un message supplémentaire, qui comprend un ou plusieurs éléments d'information qui sont choisis parmi les éléments suivants :
• dimensions du véhicule,
• signaux lumineux du véhicule, qui comprennent des signaux clignotants du véhicule,
• une vitesse du véhicule,
• une accélération du véhicule,
• un rapport ou un changement de rapport du véhicule,
• un angle de braquage du véhicule,
• une position du véhicule, et
• une orientation du véhicule.

3. Procédé selon l'une des revendications 1 à 2,
**caractérisé en ce**
**que** l'algorithme d'analyse réalise en outre une comparaison de la position du véhicule avec des données cartographiques qui indexent des places de stationnement.

4. Procédé selon l'une des revendications précédentes,
dans lequel le procédé comprend en outre les étapes suivantes :
détection d'informations d'un appareil mobile, qui décrivent un mouvement de l'appareil mobile, et
évaluation des informations de l'appareil mobile pour reconnaître le changement d'état d'occupation.

5. Procédé selon l'une des revendications précédentes,
**caractérisé en ce**
**qu'**un résultat de l'évaluation des signaux radio est transmis à un serveur dorsal et/ou à un autre véhicule par le biais de la communication Car-2-Car.

6. Procédé selon l'une des revendications précédentes,
**caractérisé en ce**
**qu'**une latence de bout en bout n'est pas supérieure à 15 secondes.

7. Dispositif (20) permettant de reconnaître un changement d'état d'occupation d'une place de stationnement, comprenant
des moyens de communication (1) pour reconnaître des signaux radio dans un autre véhicule, qui sont envoyés par un véhicule par le biais d'une communication Car-2-Car, et
un processeur (2) pour évaluer les signaux radio dans l'autre véhicule selon le procédé selon la revendication 1, afin de reconnaître à l'aide de cette évaluation si une place de stationnement est libérée par le véhicule ou est actuellement occupée par le véhicule.

8. Véhicule (10) comportant un dispositif selon la revendication 7.
